# EUROPEAN PATENT APPLICATION

(11) **EP 3 958 095 A1**
(43) Date of publication of application: **23.02.2022**
(21) Application number: 20192066.7
(22) Date of filing: 21.08.2020
(51) Int. Cl.: G06F 3/01, G06F 1/16, G06F 3/0346, G02B 27/01

(54) **A MOBILE COMPUTER-TETHERED VIRTUAL REALITY/AUGMENTED REALITY SYSTEM USING THE MOBILE COMPUTER AS A MAN MACHINE INTERFACE**

(71) Applicant: Deutsche Telekom AG, 53113 Bonn (DE)
(72) Inventor: YUN, Harrison Hongseo, 12203 Berlin (DE); JUNG, Darrell Kwangil, 10785 Berlin (DE); HELMUT, Vivien, 12309 Berlin (DE); BUCHHOLZ, Thomas, 10317 Berlin (DE)
(74) Representative: Vossius & Partner Patentanwälte Rechtsanwälte mbB

(57) **Abstract**

The present invention relates to a virtual reality (VR) or augmented reality (AR) system comprising a mobile computer and a head mount display (HMD) tethered to the mobile computer. In the VR/AR system, the mobile computer is used not only as a computing device for generating VR/AR images but also a VR/AR controller for controlling a VR/AR service provided in the system. User inputs for such controlling is generated by sensors installed in the mobile computer, including a touch sensor, a tracking sensor and/or a 3D depth sensor.

## Description

The present invention relates to a virtual reality (VR) or augmented reality (AR) system and a method of operating said system.

A VR system enables users to experience an artificial environment that is created with software in such a way that users accept the artificial environment as a real environment. An AR system provides users with an interactive experience of a real-world environment where the objects that reside in the real world are enhanced by computer-generated perceptual information. This VR and AR system can be selectively implemented by one single system.

In the following description, claims and drawings, the term "VR/AR" means "virtual reality or augmented reality".

A VR/AR system is generally based on a glass headset, i.e. a head-mounted display (HMD). The HMD basically comprises a display which may be separately attached or installed as one body with the HMD itself. For a VR system, users can immerse themselves in a virtual 3D space and view the virtual 3D space in the display, rendering of which changes dynamically at least in response to user's head position and movement.

The HMDs may be roughly categorized into three different types, i.e. mobile, tethered and stand-alone. Mobile-type HMDs provide shells with lenses into which mobile devices can be inserted. Tethered HMDs are connected to stationary computers and provided with VR/AR images and sound data from the connected computers. Stand-alone HMDs include a processor and a storage memory therein required for executing a VR/AR application and generating VR/AR images for rendering.

VR/AR systems comprising stationary computer-tethered HMDs have the advantages of the fast processing capability and interoperability with external servers, and the disadvantages of unwieldy long cables and location-limited use of the system due to the cable distance.

The present invention defined in the appended claims resolves the above-identified problems.

The present invention is based on a VR/AR system comprising a mobile computer and a HMD tethered to the mobile computer. This VR/AR system is simply referred to as a mobile computer-tethered VR/AR system in the following description.

The mobile computer-tethered VR/AR system in the present invention uses a mobile computer as a VR/AR controller for controlling a VR/AR service provided in the system as well as a computing device for generating VR/AR images. As such a VR/AR controller, the mobile computer can receive user inputs with respect to the VR/AR service by various sensors, including a touch sensor, a tracking sensor and/or a 3D depth sensor, installed in the mobile computer.

The mobile computer may be used with being fixed to a user's body part or held on a hand. Therefore, the user inputs can be generated by the tracking sensor and/or the 3D depth sensor when the corresponding user's body part is moved, and/or by the touch sensor when users touch the touch sensor. The user inputs may be converted into particular user commands to the VR/AR service depending on the context of the VR/AR service currently being provided.

One or more conventional VR/AR controllers and/or VR/AR accessory devices can be replaced by this multi-functional mobile computer, and thus the VR/AR system can be more simplified without an additional VR/AR controller or accessory device. Further, efforts and time for connecting one or more VR/AR controllers or accessory devices to the HMD or the mobile computer.

Specifically, in the following description, there is provided a mobile computer connectable with a HMD, which has a display and at least one sensor, comprising: a processor; a display; a touch sensor having at least a portion overlapping the display; a tracking sensor configured to sense movement of 3 or 6 degree-of-freedom of the mobile computer; a 3D depth sensor configured to capture images of a space in which the mobile computer is located; and a memory comprising program codes stored therein.

When the program code are executed by the processor, the mobile computer is configured to initiate execution of a local VR/AR application for a particular VR/AR service in response to a first user input to one of the sensors in the mobile computer; activate a mode in which the local VR/AR application interfaces with at least one of the tracking sensor and the 3D depth sensor; generate, by the local VR application, VR/AR images for transmission to the HMD; receive a second user input from the at least one of the tracking sensor and the 3D depth sensor; and generate, by the local VR application, updated VR/AR images for transmission to the HMD, based on the received second user input.

Preferably, the mobile computer may be further configured for the local VR/AR application to interface further with the touch sensor in the activated mode, to generate a screen or graphic user interface, GUI, for transmission to the display, and to receive the second user input from the touch sensor in response to the display of the screen or GUI.

Preferably, the mobile computer may be further configured to determine that the HMD is connected to the mobile computer; transmit the generated VR/AR images to the HMD; and receive a third user input from the at least one sensor in the HMD, wherein the updated VR/AR images are generated further based on the received third user input.

Preferably, the mobile computer may be further configured to determine that the at least one sensor in the HMD is the same type as the at least one of the sensors in the mobile computer, and receive user inputs selectively or alternatively from two sensors of the same type in the mobile computer and the HMD based on the context of the particular VR/AR service being provided.

Preferably, the mobile computer may be further configured to receive user inputs alternatively from at least two of the touch sensor, the tracking sensor and the 3D depth sensor based on the context of the particular VR/AR service being provided.

Preferably, the mobile computer may be further configured to: determine that the remote VR/AR server or stationary computer is connected to the mobile computer; distribute, to the remote VR/AR server or stationary compute, part of processing for generating the updated VR/AR images, with transmitting the second and/or third user input to the remote VR/AR server or stationary computer; receive results of the distributed processing from the remote VR/AR server or stationary computer; and complete the updated VR/AR images by combining the received processing results with results of the processing performed by the mobile computer.

There is further provided a method of controlling a VR/AR system comprising a mobile computer and a HMD. The mobile computer comprises a processor; a display ; a touch sensor having at least a portion overlapping the display; a tracking sensor configured to sense 3 or 6 degree-of-freedom movement of of the mobile computer; a 3D depth sensor configured to capture images of a certain wide angle around the mobile computer; and a memory comprising program codes stored therein. The HMD is connected to the mobile computer and has a display and at least one sensor.

The method comprises initiating execution of a local VR/AR application for a VR/AR service in response to a first user input to one of the sensors in the mobile computer; activating a mode in which the local VR/AR application interfaces with at least one of the tracking sensor and the 3D depth sensor; generating VR/AR images for transmission to the HMD; receiving a second user input from the at least one of the tracking sensor and the 3D depth sensor; and generating, by the mobile computer, updated VR/AR images for transmission to the HMD, based on the received second user input.

Preferably, the method may further comprise configuring the local VR/AR application to interface further with the touch sensor in the activated mode; generating a GUI for transmission to the display; and receiving the second user input further from the touch sensor.

Preferably, the method may further comprise transmitting the generated VR/AR images to the HMD; receiving a third user input from the at least one sensor in the HMD; transmitting the received third user input to the mobile computer; and generating the updated VR/AR images further based on the received third user input.

Preferably, the method may further comprise determining that the at least one sensor in the HMD is the same type as at least one of the sensors in the mobile computer; and receiving user inputs selectively or alternatively from two sensors of the same type in the mobile computer and the HMD based on the context of the VR/AR service being provided.

Preferably, the method many further comprises receiving user inputs alternatively from at least two of the touch sensor, the tracking sensor and the 3D depth sensor based on the context of the VR/AR service being provided.

Preferably, the method may further comprise determining that a remote VR/AR server or stationary computer is connected to the mobile computer; distributing to the remote VR/AR server or stationary computer part of processing for generating the updated VR/AR images, with transmitting the second and/or third user input to the remote VR/AR server or stationary computer; receiving results of the distributed processing from the remote VR/AR server or stationary computer; and completing the updated VR/AR images by combining the received processing results with results of the processing performed by the mobile computer.

There is further provided a VR/AR system comprising the mobile computer mentioned above, and a HMD which is connected to the mobile computer and comprises a display for displaying VR/AR images received from the mobile computer and at least one sensor for receiving user inputs in response to the displayed VR/AR images.

Preferably, the VR/AR system may further comprise an accessory device for fixing the mobile computer to a body part of user.

The accompanying drawings, which are included to provide a further understanding of the present invention and constitute a portion of the specification, illustrate one or more embodiments of the present invention, and serve to explain the principle of the present invention together with the description.

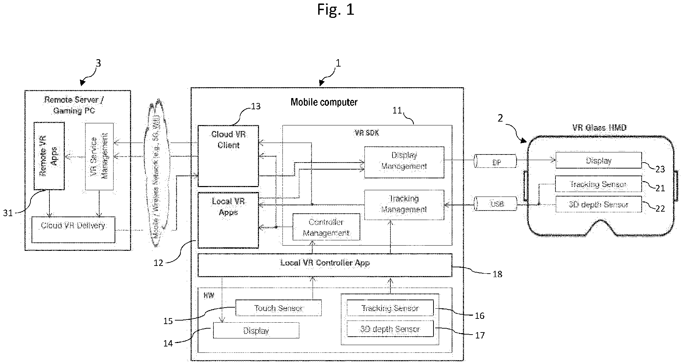

Fig. 1 illustrates a high-level architecture of a mobile computer-tethered VR/AR system according to the present invention.
Fig. 2 illustrate a method of controlling the mobile computer-tethered VR/AR system of Fig. 1.

According the figures, a mobile computer-tethered VR/AR system basically comprises a mobile computer 1 and a HMD 2. The VR/AR system may further comprise a remote server or stationary computer 3 communicating with the mobile computer 1

The HMD 2 comprises one or more tracking sensors 21, one or more 3D depth sensors 22 and a display 23.

The tracking sensor 21 tracks a motion of the user's head. The tracking sensor 21 may be a gyroscope or accelerometer but is not limited to that. The tracking sensor 21 may be 3 or 6 degree-of-freedom tracking sensors. The term "6 degree-of-freedom" refers to movement in three-dimensional space including changes in position along three perpendicular axes and in orientation through rotation about the three perpendicular axes. The tracking sensor 21 provides sensor readings, which correspond to a motion of the user's head, to the mobile computer 1 for use in image or video rendering.

The HMD 2 further comprises one or more communication modules (not shown) to transmit the sensor readings to the mobile computer 1. The sensor readings may include, but are not limited to, coordinates relating to various positions of the user's head during VR/AR activities. The sensor readings are used by a VR/AR application running on the mobile computer 1 and/or the remote server 4.

The 3D depth sensor 22 capture images of a certain wide angle around the HMD 2. Based on multiples images captured in various view angles, a position of the HMD 2 can be determined. The 3D depth sensor 22 may be a camera, but is not limited to that. As users move their head, changes in positions of the user's head over time are tracked by the 3D depth sensor 22 and used to determine positions of the HMD 21, 21 in accordance with actual physical head motions made by the user.

The display 23 presents virtual-reality images generated by the mobile computer 1 and/or the server 4. Specifically, when user shifts their head in some direction and/or tilts their head at an angle, new sensor readings from the tracking sensor 21 and the 3D depth sensor 22 are obtained and transmitted to the mobile computer 1. After VR/AR images have been newly generated by the mobile computer 1 and/or the server 4 based on the new sensor readings, the new 3D virtual images are transmitted to the HMD 2. The HMD 2 presents on the display 23 a view corresponding to the shifting and/or titling movement of the user's head. The communication module (not shown) in the HMD 2 is also configured to receive the 3D virtual images from the mobile computer 1.

The mobile computer 1 comprises a processor (not shown), a memory (not shown), a display 14, a touch sensor 15, a tracking sensor 16 and a 3D depth sensor 17.

The display 14 may display a screen or GUI related to a VR/AR service currently being provided in the system.

The touch sensor 15 detects user's touch inputs in response to the displayed screen or GUI on the display 14 in the mobile computer 1, or in response to VR/AR images displayed on the HMD 2. The touch sensor 15 may be a touch screen or touch pad which is disposed to, at least partially, overlap with the display 14.

Displaying the screen or GUI on the display 14 and detecting user's touch inputs in response to the displayed screen or GUI may be controlled by a local VR/AR controller application. The local VR/AR controller application may be stored in the memory (not shown) of the mobile computer 1.

The tracking sensor 16 may be a gyroscope or accelerometer but is not limited to that. The tracking sensor 16 may be 3 or 6 degree-of-freedom tracking sensors. The tracking sensor 16 can sense and track movements of the mobile computer 1. In the mobile computer-tethered VR/AR system, the mobile computer 1 is used with being attached to a body part of user, for instance, arm, shoulder or leg, or held by users on a hand or in any holding accessory while the users experience a VR/AR service. Therefore, the tracking sensor 16 can sense and track movements of the body part where the mobile computer 1 is fixed or held.

The 3D depth sensor 17 captures images of a certain wide angle around the mobile computer 1. Based on multiples images captured in various view angles, a position of the mobile computer 1 can be determined. The 3D depth sensor 17 may be a camera but is not limited to that. Since the mobile computer 1 is fixed to a body part of user or held by the user on a hand or in any holding accessory, the 3D depth sensor 17 can track a position of the body part where the mobile device 1 is fixed or held.

Under this usage scene of the mobile computer 1, user inputs to a VR/AR service can be made by users moving their body part including a hand where the mobile computer 1 is fixed or held. These movement-type user inputs may be converted into user's commands of changing one or more property of VR/AR images being presented. For example, the user inputs may be converted into user's commands of moving a corresponding body part or entire body of a virtual character in the VR/AR service.

Further, user inputs to the VR/AR service can be made by users touching the touch sensor. These touch-type user inputs also may be converted into user's commands of changing one or more property of VR/AR images being presented. For example, the user inputs through the touch sensor may be converted into user's commands of selecting an option presented in a GUI displayed on the display 14 of the mobile computer 1 or presented in VR/AR images displayed on the display 23 of the HMD 23.

Sensor reading of the tracking sensor 16 and the 3D depth sensor 17 may be transmitted to the local VR/AR controller application 18.

The mobile computer 1 has a plurality of software modules stored in the memory (not shown). The software modules comprise a VR/AR software development kit, VR/AR SDK 11.

The VR/AR SDK 11 performs the function of obtaining position and/or movement data of the user's head based on the sensor readings from the tracking sensor 21 and/or the 3D depth sensor 22, which are transmitted to the mobile computer 1. The obtained position and/or movement data of the user's head is transmitted to a local VR/AR application 12 and/or the remote VR/AR server via a cloud VR/AR client 13. This function is particularly performed by a tracking management module in the VR/AR SDK 11. The track management module of the VR/AR SDK 11 receives data related to positions and/or movements of a user's body part where the mobile computer 1 is fixed or held. The data may be transmitted to the local or remote VR/AR application from the local VR/AR controller application 18 or directly from the tracking sensor 16 and the 3D depth sensor 17.

The VR/AR SDK 11 further performs the function of manipulating VR/AR image and/or video received from the local VR/AR application 12 and/or the remote VR/AR server 3 to be adapted for display on the HMD 2. This function is particularly performed by a display management module of the VR/AR SDK 11.

The VR/AR SDK 11 further performs the function of receiving inputs directly from the touch sensor 15 or via the local VR/AR controller application 18. This function is particularly performed by a controller management module of the VR/AR SDK 11. These inputs are supplied to the local VR/AR application and/or the remote VR/AR server via the cloud VR/AR client.

Communications between the mobile computer 1 and the HMD 2 may be performed on wire or wirelessly and in any communication protocol, not limited to USB or Bluetooth. Thus, data related to the sensor readings by the tracking sensor 21 and/or the 3D depth sensor 22 and the adapted VR/AR images and/or video may be received and transmitted by this communication method and protocol between the mobile computer 1 and the HMD

The local VR/AR application 12 is stored in the memory (not shown) in the mobile computer 1. The local VR/AR application 12 generates 3D VR/AR images and/or video for a VR/AR service to be displayed on the HMD 2. The rendered VR/AR images and video are updated in response to the data which are related to positions and/or movements of the user's head and received from the tracking management module; the data which are related to positions and/or movement of a user's body part where the mobile computer 1 is fixed or held; and/or the data which are related to user inputs through the touch sensor 15. Therefore, VR/AR images and/or video displayed on the HMD 2 are dynamically changed in response for users to move their head where the HMD 2 is mounted, and/or a body part where the mobile computer 1 is fixed or held; and/or to give inputs to the touch sensor 15 of the mobile computer 1.

As mentioned above, the mobile computer-tethered VR/AR system in the invention may further comprise the remote VR/AR server or stationary computer 3. The remote VR/AR server 3 communicates with the mobile computer 1 wirelessly in any communication protocol, not limited to 5G or Wifi.

The remote VR/AR server 3 may be any server accessible by the mobile computer 1 in a cloud computing environment, not a dedicated server.

The remote VR/AR server 3 comprises a remote VR/AR application 31 performing a function similar to or same as the function performed by the local VR/AR application 12. Processing assigned to the local VR/AR application 12 may be partially taken over by the remote VR/AR application 31 depending on current workload of the local VR/AR application 12.

In case where the remote VR/AR server 3 is not available, total processing for a VR/AR service may be performed by the local VR/AR application 12. Alternatively, in case where the mobile computer-tethered VR/AR system, particularly by the mobile computer 1, identifies availability of the remote VR/AR server 3, total processing for a VR/AR service may be distributed between the mobile computer 1 and the remote VR/AR server 3 and separately performed by the respective local and remote VR/AR applications 12, 31. Then, the results of the processing are collected and manipulated to be adapted for display on the HMD 2. This collection and manipulation may be performed by the display management module in the VR/AR SDK 11.

When part of the total processing for the VR service is distributed to the remote VR/AR server 3, data related to sensor readings from one of the touch sensor 15, the tracking sensor 16 and the 3D depth sensor 17 may be transmitted to the remote VR/AR server 3 from the mobile computer 1 and used by the remote VR/AR server 3 for the distributed processing.

A ratio of dividing the total processing between the local VR/AR application 12 and the remote VR/AR application 13 may be changed dynamically depending on a data transceiving speed between the mobile computer 1 and the remote VR/AR server 3. For instance, as the data transceving speed is higher, more processing is performed by the remote VR/AR application 13. Alternatively, the ratio may be adjusted based on processing capability of the mobile computer 1, such as hardware capability. For instance, if the mobile computer 1 has lower processing capability than a preset level, more processing for the VR/AR service may be performed by the remote VR/AR application 31. Alternatively, the ratio may be adjusted based on the difference in processing capability between the mobile computer 1 and the remote VR/AR server 3. For instance, as such difference is higher, more processing may be performed by the remote VR/AR application 31.

The mobile computer 1 may further comprise a cloud VR/AR client 13 to transmit data necessary for processing by the remote VR/AR application 31 to the remote VR/AR server 3 and receive results of the processing from the remote VR/AR server 3.

The remote VR/AR server 3 may further comprise a VR/AR service management for receiving the data transmitted from the could VR/AR client 13. The VR/AR service management may further adjust priorities of different processing. The remote VR/AR server 3 may further comprises a cloud VR/AR delivery for delivering results of the processing to the cloud VR/AR client 13.

In the mobile computer-tethered VR/AR system of the invention, the mobile computer 1 is used with being attached to a user's body part or held by a user's hand. The user's body part may be an arm or the back of a hand, but not limited to that. For secure fixture of the mobile computer 1 to the user's body, an accessory device may be further used. The accessory device may have one part suitable for fixing it at the user's body part, and another part suitable for holding the mobile computer 1 securely.

In the mobile computer-tethered VR/AR system of the invention, the mobile computer 1 replaces a conventional Bluetooth-type VR/AR controller. In other words, users can provide inputs or commends, at least, through the touch sensor 15 of the mobile computer 1 to control or make changes in a VR/AR service being provided. Specifically, a GUI is displayed on the display 14 of the mobile computer 1. Since the touch sensor 15 is disposed to overlap the display 14, a user's touch on the display 14 in response to the displayed GUI is detected by the touch sensor 15 and interpreted as a user input applied to the displayed GUI.

To facilitate user inputs through the touch sensor 15, the accessory device may allow the mobile computer to be fixed with its front side being exposed, where the touch sensor 15 and the display 14 are disposed. Users thus can readily access the touch sensor 1 while experiencing a VR/AR service.

The mobile computer-tethered VR/AR system may activate and deactivate a mode of using the mobile computer 1 as a VR/AR controller (i.e. a mode where user inputs through the touch sensor 15, the tracking sensor 16, or the 3D depth sensor 17 in the mobile computer 1 is used for a VR/AR service). The activation and deactivation of the mode can be made through the mobile computer 1, for instance through the local VR/AR controller application 18, by users.

The mobile computer-tethered VR/AR system may further comprise a VR/AR accessory device (not shown). The VR/AR accessory device is an input device having a shape optimized for a particular type of user inputs. The VR/AR accessory is used for the purpose of providing more immersive VR/AR experience. The VR/AR accessory may have a shape of gloves or a steering wheel but is not limited to that. The VR/AR accessory may receive user inputs dedicated for a particular VR/AR application or a particular HMD. The VR/AR accessory may be connected to the mobile computer 1 directly or via the HMD 2 wirelessly or on wire.

The VR/AR accessory comprises one or more sensors to detect user inputs. The sensors may be a pressure sensor or a gyroscope but is not limited to that. The VR/AR accessory further comprises one or more communication module to transmit sensor readings to an external device. For instance, data related to the sensor readings from the VR/AR accessory may be transmitted directly to the local VR/AR application 12 of the mobile computer 1 or via the HMD 2. These data are used for a VR/AR service together with the data related to the sensor readings from the HMD 2 and/or with the data related to the sensor reading from the touch sensor 15, the tracking sensor 16 and/or the 3D depth sensor 17 in the mobile computer 1.

In case where a VR/AR accessory device is connected to the mobile computer 1, reading from one of the sensors 15, 16 and 17 in the mobile computer 1 may be disabled. This disabling may be determined automatically when the VR/AR accessory device is connected to the mobile computer 1, or manually by user setting. The disabling may be applied to one or more sensors in the mobile computer 1, which detect the same type of user inputs as one or more sensors in the VR/AR accessory device.

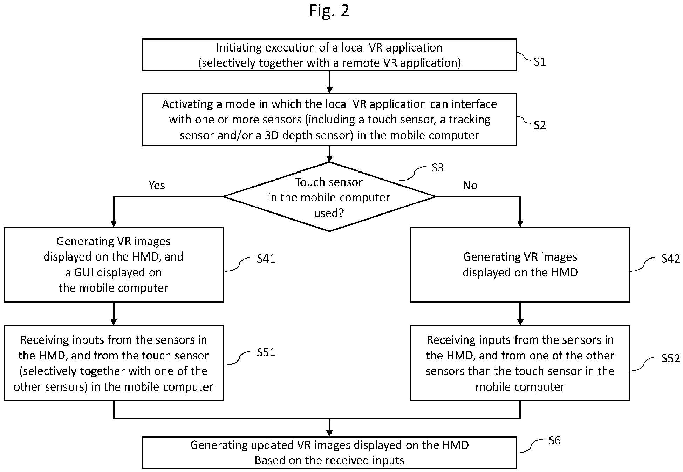

A method of controlling a mobile computer-tethered VR/AR system according to the present invention is illustrated in Fig. 2.

To enjoy a VR/AR service in the system, users start to execute the local VR/AR application 12 or the remote VR/AR application 13 by providing a user input to one of the sensors in the mobile computer 1, for instance by touching an icon of the local VR/AR application 12 displayed on the display 14 (SI). This touch input is sensed by a part of the touch sensor 15 overlapping the icon on the display 14. Depending on the processing capability and/or a current computing workload of the mobile computer 1, the remote VR/AR application 31, which cooperates with the local VR/AR application 12 for implementing the VR/AR service, may start to be executed at the same time or with some time difference.

The system, particularly by the mobile computer 1, checks whether the HMD 2 is connected to the mobile computer 1. If so, the system configures the HMD 2 to be in a ready state to receive VR/AR 3D images from the mobile computer 1 and to transmit sensor readings to the mobile computer 1.

The system, particularly by the local VR/AR application 12 selectively together with the local VR/AR controller application 18, activates a mode in which the local VR/AR application 12 can interface with one or more sensors, including the touch sensor 15, the tracking sensor 16 and/or the 3D depth sensor 17, in the mobile computer 1 (S2).

The mode activation may automatically proceed in response to the execution of the local VR/AR application 12, or the detection of the HMD 2 connected to the mobile computer 1. Alternatively, the mode activation may be manually made by user inputs through other input means in the mobile computer 1, such as physical buttons, and/or the sensors 21, 22 in the HMD 2.

In said mode, only one sensor may be used, or two or more sensors in the mobile device 1 may be used for the VR service. The number or kinds of sensors to be used may be determined depending on the local VR/AR application 12 being executed, or user's pre-setting. For instance, if the context of the VR/AR service currently being provided by the local VR/AR application 12 needs inputs from the tracking sensor 16 in the mobile computer 1 only, the mode may be set for the local VR/AR application not to interface with the touch sensor 15 and the 3D depth sensor 17 in the mobile computer 1.

Alternatively, the number or kinds of sensors in the mobile computer 1 to be used in said mode may be determined based on which kinds of sensors the HMD 2 connected to the mobile computer 1 has. For instance, the local VR/AR application may not interface with the 3D depth sensor 17 of the mobile computer 1 in said mode in case where the HMD 2 also has a 3D depth sensor 22 and the system (particularly by the local VR/AR application) decides to use the 3D depth sensor 22 in the HMD 2 only, instead of using the two sensors of the same type.

Alternatively, in case where each of the mobile computer 1 and the HDM 2 has a sensor of a same type, the two sensors may be selectively or alternatively used to precisely receive user inputs suitable for the context of the VR/AR service being provided.

The method includes a step of determine whether or not the local VR/AR application 12 can interface with the touch sensor 15 in the activated mode (S3).

If determined so, the local VR/AR application 12 and/or the remote VR/AR application 31 generates VR/AR images to be displayed on the HMD 2 and a screen or GUI to be shown on the display 14 in the mobile computer 1 (S41). In response to the VR/AR images and the screen or GUI, users may make inputs to the VR/AR service by moving their head, moving their body part where the mobile computer 1 is fixed or held, and/or touching the touch sensor 15 (S51).

If determined not, the local VR/AR application 12 and/or the remote VR/AR application 31 generates VR/AR images displayed on the HMD 2, not with a screen or GUI displayed on the display 14 in the mobile computer 1 (S42). In response to the VR/AR images, users may make inputs to the VR/AR service by moving their head and/or their body part where the mobile computer 1 is fixed or held (S52).

Data representing at least one of these use inputs are delivered to the local VR/AR application 12 and/or the remote VR/AR application 31. Then, the local VR/AR application 12 and/or the remote VR/AR application 31 updates VR/AR images to be displayed on the HMD 2 based on the received use input data (S6).

When the remote VR/AR server 3 is available for implementing the VR service and thus performs part of the total processing for generating the updated VR/AR images, user inputs necessary for the processing by the remote VR/AR server 3 may be transmitted from the mobile computer 1. The transmitted user inputs include user inputs to at least one of the touch sensor 15, the tracking sensor 16 and the 3D depth sensor 17 of the mobile computer 1, and the tracking sensor 21 and the 3D depth sensor 22 of the HMD 2. After the distributed computing by the remote VR/AR server 3, the mobile computer 1 receives results of the distributed processing from the remote VR/AR server 3 and completes the updated VR/AR images by combining the received processing results with results of the processing performed by the mobile computer 1.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A mobile computer (1) connectable with a head mount display (2), HMD, which has a display and at least one sensor, comprising:
a processor;
a display (14);
a touch sensor (15) having at least a portion overlapping the display (14);
a tracking sensor (16) configured to sense movement of 3 or 6 degree-of-freedom of the mobile computer (1);
a 3D depth sensor (17) configured to capture images of a space in which the mobile computer (1) is located; and
a memory comprising program codes stored therein, when executed by the processor, configured to:
initiate execution of a local VR/AR application for a VR/AR service in response to a first user input to one of the sensors (15, 16, 17);
activate a mode in which the local VR/AR application interfaces with at least one of the tracking sensor (16) and the 3D depth sensor (17);
generate, by the local VR application, VR/AR images for transmission to the HMD;
receiving a second user input from the at least one of the tracking sensor (16) and the 3D depth sensor (17); and
generate, by the local VR application, updated VR/AR images for transmission to the HMD, based on the received second user input.

2. The mobile computer (1) of claim 1, wherein the memory further comprises program codes stored therein, when executed by the processor, configured:
the local VR/AR application to interface further with the touch sensor (15) in the activated mode,
to generate a screen or graphic user interface, GUI, for transmission to the display (14), and
to receive the second user input further from the touch sensor (14).

3. The mobile computer (1) of claim 1 or 2, wherein the memory further comprises program codes stored therein, when executed by the processor, configured to:
determine that the HMD (2) is connected to the mobile computer (1);
transmit the generated VR/AR images to the HMD (2); and
receive a third user input from the at least one sensor in the HMD (2),
wherein the updated VR/AR images are generated further based on the received third user input.

4. The mobile computer (1) of claim 3, wherein the memory further comprises program codes stored therein, when executed by the processor, configured to:
determine that the at least one sensor in the HMD (2) is the same type as the at least one of the sensors (15, 16, 17); and
receive user inputs selectively or alternatively from two sensors of the same type in the mobile computer (1) and the HMD (2) based on the context of the VR/AR service being provided.

5. The mobile computer (1) of any one of claims 1 to 4, wherein the at least two of the touch sensor (15), the tracking sensor (16) and the 3D depth sensor (17) interface with the local VR/AR application in said mode, and
wherein the memory further comprises program codes stored therein, when executed by the processor, configured to:
receiving user inputs alternatively from at least two of the touch sensor (15), the tracking sensor (16) and the 3D depth sensor (17) based on the context of the VR/AR service being provided.

6. The mobile computer (1) of any one of claims 1 to 5, wherein the mobile computer (1) is connectable further with a remote VR/AR server or stationary computer (3), and
wherein the memory further comprises program codes stored therein, when executed by the processor, configured to:
determine that the remote VR/AR server or stationary computer (3) is connected to the mobile computer (1),
distribute, to the remote VR/AR server or stationary computer (3), part of processing for generating the updated VR/AR images, with transmitting the second user input to the remote VR/AR server or stationary computer (3);
receive results of the distributed processing from the remote VR/AR server or stationary computer (3); and
complete the updated VR/AR images by combining the received processing results with results of the processing performed by the mobile computer (1).

7. The mobile computer (1) of any one of claims 3 to 6, insofar as depending on claim 3, wherein the mobile computer (1) is connectable further with a remote VR/AR server or stationary computer (3), and
wherein the memory further comprises program codes stored therein, when executed by the processor, configured to:
determine that the remote VR/AR server or stationary computer (3) is connected to the mobile computer (1),
distribute, to the remote VR/AR server or stationary computer (3), part of processing for generating the updated VR/AR images, with transmitting the third user input to the remote VR/AR server or stationary computer (3);
receiving results of the distributed processing from the remote VR/AR server or stationary computer (3); and
completing the updated VR/AR images by combining the received processing results with results of the processing performed by the mobile computer (1).

8. A method of controlling a VR/AR system comprising a mobile computer (1) and a head mount display, HMD (2),
wherein the mobile computer (1) comprises a processor; a display (14); a touch sensor (15) having at least a portion overlapping the display (14); a tracking sensor (16) configured to sense movement of 3 or 6 degree-of-freedom of the mobile computer (1); a 3D depth sensor (17) configured to capture images of a certain wide angle around the mobile computer (1); and a memory comprising program codes stored therein, and
wherein the HMD is connected to the mobile computer (1) and has a display and at least one sensor, the method comprising:
initiating, by the mobile computer (1), execution of a local VR/AR application for a VR/AR service in response to a first user input to one of the sensors (15, 16, 17);
activating, by the mobile computer (1), a mode in which the local VR/AR application interfaces with at least one of the tracking sensor (16) and the 3D depth sensor (17);
generating, by the mobile computer (1), VR/AR images for transmission to the HMD (2);
receiving, by the mobile computer (1), a second user input from the at least one of the tracking sensor (16) and the 3D depth sensor (17); and
generating, by the mobile computer (1), updated VR/AR images for transmission to the HMD (2), based on the received second user input.

9. The method of claim 8, further comprising:
configuring, by the mobile computer (1), the local VR/AR application to interface further with the touch sensor (15) in the activated mode;
generating, by the mobile computer (1), a screen or graphic user interface, GUI, for transmission to the display (14); and
receiving, by the mobile computer (1), the second user input further from the touch sensor (14).

10. The method of claim 8 or 9 further comprising:
transmitting, by the mobile computer (1), the generated VR/AR images to the HMD (2);
receiving, by the HMD (2), a third user input from the at least one sensor in the HMD (2) and transmitting, by the HMD (2), the received third user input to the mobile computer (1); and
generating, by the mobile computer (1), the updated VR/AR images further based on the received third user input.

11. The method of claim 10 further comprising:
determining, by the mobile computer (1), that the at least one sensor in the HMD (2) is the same type as the at least one of the sensors (15, 16, 17); and
receiving user inputs selectively or alternatively from two sensors of the same type in the mobile computer (1) and the HMD (2) based on the context of the VR/AR service being provided.

12. The method of any one of claim 8 to 11, wherein the at least two of the touch sensor (15), the tracking sensor (16) and the 3D depth sensor (17) interface with the local VR/AR application in said mode, further comprising:
receiving user inputs alternatively from the at least two of the touch sensor (15), the tracking sensor (16) and the 3D depth sensor (17) based on the context of the VR/AR service being provided.

13. The method of any one of claim 8 to 12, further comprising:
determining, by the mobile computer (1), that a remote VR/AR server or stationary computer (3) is connected to the mobile computer (1);
distributing, by the mobile computer (1), to the remote VR/AR server or stationary computer (3), part of processing for generating the updated VR/AR images, with transmitting the second and/or third user input to the remote VR/AR server or stationary computer (3);
receiving results of the distributed processing from the remote VR/AR server or stationary computer (3); and
completing the updated VR/AR images by combining the received processing results with results of the processing performed by the mobile computer (1).

14. A VR/AR system comprising:
the mobile computer (1) of any one of claims 1 to 7; and
a head mount display, HMD (2) which is connected to the mobile computer (1) and comprises a display for displaying VR/AR images received from the mobile computer (1) and at least one sensor for receiving user inputs in response to the displayed VR/AR images.

15. The VR/AR system of claim 14, further comprising an accessory device for fixing the mobile computer (1) to a body part of user.

## Amended claims

### Amended claims in accordance with Rule 137(2) EPC.

1. A mobile computer (1) capable of being fixed to a user's body part or held on a hand of the user and connectable with a head mount display (2), HMD, which has a display and at least one sensor, comprising:
a processor;
a display (14);
a touch sensor (15) having at least a portion overlapping the display (14);
a tracking sensor (16) configured to sense movement of 3 or 6 degree-of-freedom of the mobile computer (1);
a 3D depth sensor (17) configured to capture images of a space in which the mobile computer (1) is located; and
a memory comprising program codes stored therein, when executed by the processor, configured to:
initiate execution of a local VR/AR application for a VR/AR service in response to a first user input to one of the sensors (15, 16, 17);
activate a mode in which the local VR/AR application interfaces with at least one of the tracking sensor (16) and the 3D depth sensor (17);
generate, by the local VR/AR application, VR/AR images for transmission to the HMD;
receiving a second user input from the at least one of the tracking sensor (16) and the 3D depth sensor (17); and
generate, by the local VR/AR application, updated VR/AR images for transmission to the HMD, based on the received second user input,
wherein the memory further comprises program codes stored therein, when executed by the processor, configured to:
determine that the HMD (2) is connected to the mobile computer (1);
transmit the generated VR/AR images to the HMD (2); and
receive a third user input from the at least one sensor in the HMD (2), wherein the updated VR/AR images are generated further based on the received third user input,
**characterized in that** the memory further comprises program codes stored therein, when executed by the processor, configured to:
determine that the at least one sensor in the HMD (2) is the same type as the at least one of the sensors (16, 17); and
receive user inputs selectively or alternatively from two sensors of the same type in the mobile computer (1) and the HMD (2) based on the context of the VR/AR service being provided.

2. The mobile computer (1) of claim 1, wherein the memory further comprises program codes stored therein, when executed by the processor, configured:
the local VR/AR application to interface further with the touch sensor (15) in the activated mode,
to generate a screen or graphic user interface, GUI, for transmission to the display (14), and
to receive the second user input further from the touch sensor (14).

3. The mobile computer (1) of claim 1 or 2, wherein the at least two of the touch sensor (15), the tracking sensor (16) and the 3D depth sensor (17) interface with the local VR/AR application in said mode, and
wherein the memory further comprises program codes stored therein, when executed by the processor, configured to:
receiving user inputs alternatively from at least two of the touch sensor (15), the tracking sensor (16) and the 3D depth sensor (17) based on the context of the VR/AR service being provided.

4. The mobile computer (1) of any one of claims 1 to 3, wherein the mobile computer (1) is connectable further with a remote VR/AR server or stationary computer (3), and
wherein the memory further comprises program codes stored therein, when executed by the processor, configured to:
determine that the remote VR/AR server or stationary computer (3) is connected to the mobile computer (1),
distribute, to the remote VR/AR server or stationary computer (3), part of processing for generating the updated VR/AR images, with transmitting the second user input to the remote VR/AR server or stationary computer (3);
receive results of the distributed processing from the remote VR/AR server or stationary computer (3); and
complete the updated VR/AR images by combining the received processing results with results of the processing performed by the mobile computer (1).

5. The mobile computer (1) of any one of claims 1 to 4, wherein the mobile computer (1) is connectable further with a remote VR/AR server or stationary computer (3), and
wherein the memory further comprises program codes stored therein, when executed by the processor, configured to:
determine that the remote VR/AR server or stationary computer (3) is connected to the mobile computer (1),
distribute, to the remote VR/AR server or stationary computer (3), part of processing for generating the updated VR/AR images, with transmitting the third user input to the remote VR/AR server or stationary computer (3);
receiving results of the distributed processing from the remote VR/AR server or stationary computer (3); and
completing the updated VR/AR images by combining the received processing results with results of the processing performed by the mobile computer (1).

6. A method of controlling a VR/AR system comprising a mobile computer (1) fixed to a user's body part or held on a hand of the user and a head mount display, HMD (2),
wherein the mobile computer (1) comprises a processor; a display (14); a touch sensor (15) having at least a portion overlapping the display (14); a tracking sensor (16) configured to sense movement of 3 or 6 degree-of-freedom of the mobile computer (1); a 3D depth sensor (17) configured to capture images of a certain wide angle around the mobile computer (1); and a memory comprising program codes stored therein, and
wherein the HMD is connected to the mobile computer (1) and has a display and at least one sensor, the method comprising:
initiating, by the mobile computer (1), execution of a local VR/AR application for a VR/AR service in response to a first user input to one of the sensors (15, 16, 17);
activating, by the mobile computer (1), a mode in which the local VR/AR application interfaces with at least one of the tracking sensor (16) and the 3D depth sensor (17);
generating, by the mobile computer (1), VR/AR images for transmission to the HMD (2);
receiving, by the mobile computer (1), a second user input from the at least one of the tracking sensor (16) and the 3D depth sensor (17);
generating, by the mobile computer (1), updated VR/AR images for transmission to the HMD (2), based on the received second user input;
transmitting, by the mobile computer (1), the generated VR/AR images to the HMD (2);
receiving, by the HMD (2), a third user input from the at least one sensor in the HMD (2) and transmitting, by the HMD (2), the received third user input to the mobile computer (1); and
generating, by the mobile computer (1), the updated VR/AR images further based on the received third user input,
**characterized in that** the method further comprises:
determining, by the mobile computer (1), that the at least one sensor in the HMD (2) is the same type as the at least one of the sensors (16, 17); and
receiving user inputs selectively or alternatively from two sensors of the same type in the mobile computer (1) and the HMD (2) based on the context of the VR/AR service being provided.

7. The method of claim 6, further comprising:
configuring, by the mobile computer (1), the local VR/AR application to interface further with the touch sensor (15) in the activated mode;
generating, by the mobile computer (1), a screen or graphic user interface, GUI, for transmission to the display (14); and
receiving, by the mobile computer (1), the second user input further from the touch sensor (14).

8. The method of claim 6 or 7, wherein the at least two of the touch sensor (15), the tracking sensor (16) and the 3D depth sensor (17) interface with the local VR/AR application in said mode, further comprising:
receiving user inputs alternatively from the at least two of the touch sensor (15), the tracking sensor (16) and the 3D depth sensor (17) based on the context of the VR/AR service being provided.

9. The method of any one of claim 6 to 8, further comprising:
determining, by the mobile computer (1), that a remote VR/AR server or stationary computer (3) is connected to the mobile computer (1);
distributing, by the mobile computer (1), to the remote VR/AR server or stationary computer (3), part of processing for generating the updated VR/AR images, with transmitting the second and/or third user input to the remote VR/AR server or stationary computer (3);
receiving results of the distributed processing from the remote VR/AR server or stationary computer (3); and
completing the updated VR/AR images by combining the received processing results with results of the processing performed by the mobile computer (1).

10. A VR/AR system comprising:
the mobile computer (1) of any one of claims 1 to 5; and
a head mount display, HMD (2) which is connected to the mobile computer (1) and comprises a display for displaying VR/AR images received from the mobile computer (1) and at least one sensor for receiving user inputs in response to the displayed VR/AR images.

11. The VR/AR system of claim 10, further comprising an accessory device for fixing the mobile computer (1) to a body part of user.
